# EUROPEAN PATENT APPLICATION

(11) **EP 2 284 979 A1**
(43) Date of publication of application: **16.02.2011**
(21) Application number: 09010436.5
(22) Date of filing: 13.08.2009
(51) Int. Cl.: H02K 3/26, H02K 21/24

(54) **Miniature motor with axial air gap and printed windings**

(71) Applicant: Sunonwealth Electric Machine Industry Co., Ltd., Kaohsiung, Taiwan R.O.C. (TW)
(72) Inventor: Horng, Alex, Kaohsiung (TW); Yin, Tso-Kuo, Kaohsiung (TW); Cheng, Tsung-Hsin, Kaohsiung (TW)
(74) Representative: Köhler, Walter

(57) **Abstract**

A miniature motor includes a base (10,40) having a layout layer (11,41) with two faces spaced along an axis. The layout layer (11,41) includes a coil unit (13,43). The base (10,40) further includes an outer layer (12,42) provided on one of the faces of the layout layer (11,41). Further, a shaft seat (20) is provided on the base (10,40). A rotor (30) includes a shaft (31) and a permanent magnet (32). The shaft (31) is coupled to the shaft seat (20) and rotatable about the axis. The permanent magnet (32) is aligned with the coil unit (13,43). An axial air gap (36) is formed between the permanent magnet (32) and the outer layer (12,42) of the base (10,40). The coil unit (13,43) is integrated into the base (10,40) . Thereby the axial height of the miniature motor can be reduced and the structure of the miniature motor can be simplified.

## Description

### 1. Field of the Invention

The present invention relates to a miniature motor and, more particularly, to a miniature motor with a reduced axial height and with a reduced volume.

### 2. Description of the Related Art

Currently available motors generally include a stator and a rotor. The stator includes a coil, a circuit board, and other components. The coil is mounted on and protrudes from a surface of the circuit board, leading to limitation of reduction in the overall axial height of the motor. When the motor is utilized in a heat-dissipating fan or the like, miniaturization design of the heat-dissipating fan is limited.

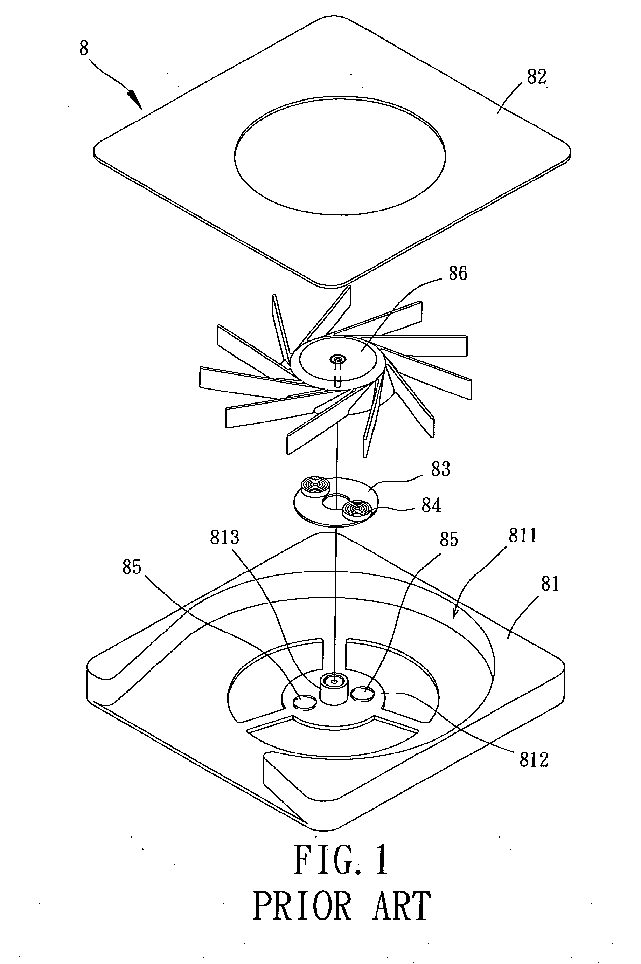

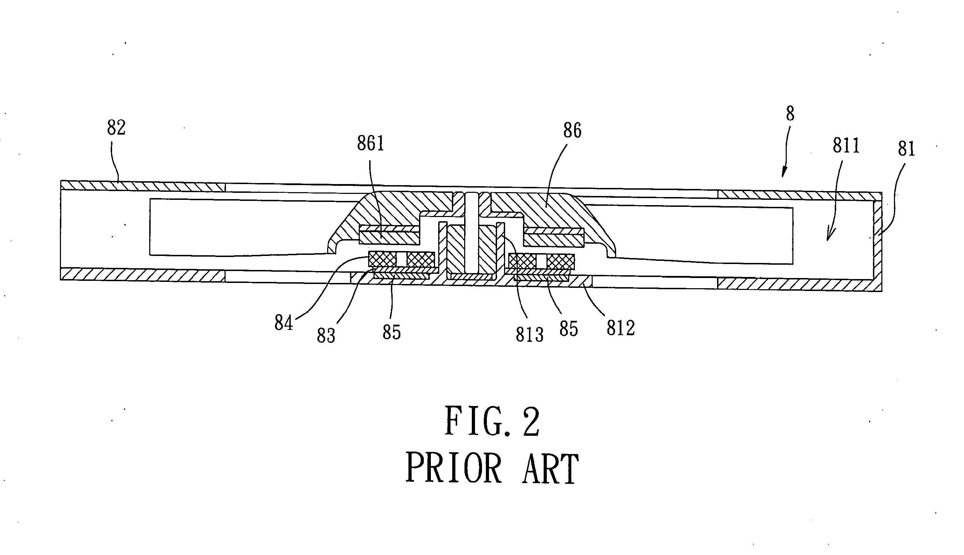

FIGS. 1 and 2 show a conventional heat-dissipating fan 8 including a housing 81 and a lid 82 mounted on top of the housing 81. The housing 81 includes a compartment 811 in which a base 812 is formed. A circuit board 83 and a coil unit 84 are mounted on the base 812. The base 812 further includes at least two positioning members 85. An axle tube 813 is formed on a center of the base 812. A rotor 86 is rotatably coupled to the axle tube 813 and rotatably received in the compartment 811. A magnet 861 is mounted to an inner side of the rotor 86 and interacts with the coil unit 84 to drive the rotor 86 to rotate. The heat-dissipating fan 8 can be mounted on differing electronic devices or equipment for heat-dissipating purposes. However, the axial heights of the circuit board 83 and the coil unit 84 outside of the circuit board 83 cause limitation to the reduction in the overall axial height of the heat-dissipating fan. As a result, it is difficult to achieve light, compact design of the heat-dissipating fan 8 and, thus, difficult to mount the heat-dissipating fan 8 in miniature electronic devices or equipment.

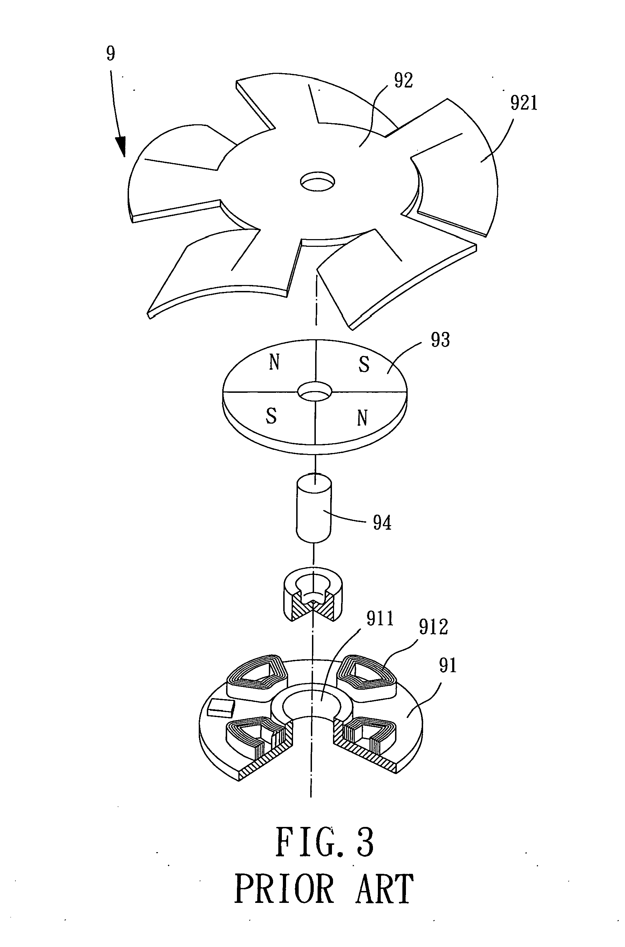

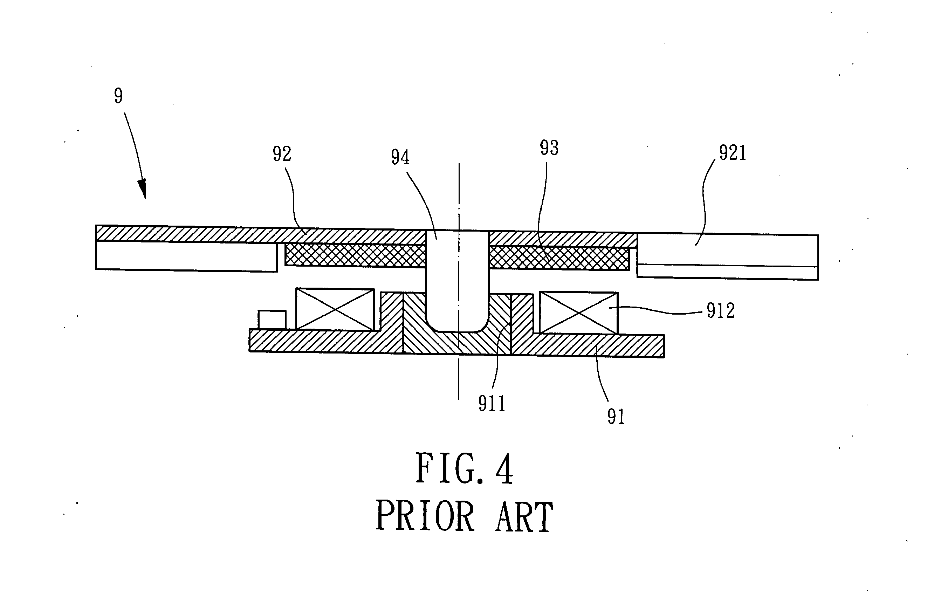

FIGS. 3 and 4 show another conventional heat-dissipating fan 9 including a base 91, an impeller 92, a disc-like magnet 93, and a shaft 94. The base 91 includes a hole 911 for rotatably receiving an end of the shaft 94. The other end of the shaft 94 is coupled to the impeller 92 that has a plurality of blades 921. A coil unit 912 is mounted on the base 91. The heat-dissipating fan 9 can be mounted on differing electronic devices or equipment for heat-dissipating purposes. An example of such a heat-dissipating fan is disclosed in Taiwan Patent No. I293106. However, the axial heights of the base 91 and the coil unit 912 cause limitation to the reduction in the overall axial height of the heat-dissipating fan 9. As a result, it is difficult to achieve light, compact design of the heat-dissipating fan 9 and, thus, difficult to mount the heat-dissipating fan 9 in miniature electronic devices or equipment.

Thus, a need exists for a miniature motor with a reduced axial height and with a reduced volume to meet the design trend of compactness and miniaturization.

### SUMMARY OF THE INVENTION

The present invention solves this need and other problems in the field of miniaturization of motors by providing, in a preferred form, a miniature motor including a base having a layout layer with first and second faces spaced along an axis. The layout layer includes a coil unit. The base further includes an outer layer provided on the first face of the layout layer. A shaft seat is provided on the base. A rotor includes a shaft and a permanent magnet. The shaft is coupled to the shaft seat and rotatable about the axis. The permanent magnet is aligned with the coil unit. An air gap is formed between the permanent magnet and the outer layer of the base. The coil unit is integrated into the base such that the coil unit is outside of the air gap. The axial height of the miniature motor is reduced, and the structure of the miniature motor is simplified.

In a preferred form, the base further includes a drive circuit, and the coil unit is electrically connected to the drive circuit for driving the rotor to rotate. The layout layer includes a plurality of circuit layers stacked along the axis. Each circuit layer has third and fourth faces spaced along the axis. The coil unit includes a plurality of electrically connected coils formed on at least one of the third and fourth faces of each circuit layer. More coils can be formed to increase the speed and the torque of the miniature motor. A circuit area is formed between two adjacent coils of one of the circuit layers. The drive circuit is mounted in the circuit area. The third face of one of two adjacent circuit layers and the fourth face of the other of the two adjacent circuit layers face each other. An electrically insulating layer is formed on one of the mutually facing third and fourth faces of the two adjacent circuit layers.

In preferred forms, the outer layer forms an electrically insulating layer for the layout layer. The base further includes a bottom layer provided on the second face of the layout layer to form an electrically insulating layer. Normal operation of the miniature motor can be assured by providing the electrically insulating outer and bottom layers.

In a preferred form, the base includes a through-hole extending along the axis, and the shaft seat is received in the through-hole, allowing easy assembly. In another preferred form, the shaft seat is integrally formed with the base as a single continuous monolithic piece to simplify the structure.

The present invention will become clearer in light of the following detailed description of illustrative embodiments of this invention described in connection with the drawings.

### BRIEF DESCRIPTION OF THE DRAWINGS

The illustrative embodiments may best be described by reference to the accompanying drawings where:
FIG 1 shows an exploded, perspective view of a conventional miniature fan.
FIG 2 shows a cross sectional view of the miniature fan of FIG. 1.
FIG 3 shows an exploded, perspective view of another conventional miniature fan.
FIG. 4 shows a cross sectional view of the miniature fan of FIG. 3.
FIG 5 shows an exploded, perspective view of a miniature motor of a first embodiment according to the preferred teachings of the present invention.
FIG. 6 shows a cross sectional view of the miniature motor of FIG. 5.
FIG. 7 shows an exploded, perspective view of a miniature motor of a second embodiment according to the preferred teachings of the present invention.
FIG 8 shows an exploded, perspective view of a base of the miniature motor of FIG. 7.

All figures are drawn for ease of explanation of the basic teachings of the present invention only; the extensions of the figures with respect to number, position, relationship, and dimensions of the parts to form the preferred embodiments will be explained or will be within the skill of the art after the following teachings of the present invention have been read and understood. Further, the exact dimensions and dimensional proportions to conform to specific force, weight, strength, and similar requirements will likewise be within the skill of the art after the following teachings of the present invention have been read and understood.

Where used in the various figures of the drawings, the same numerals designate the same or similar parts. Furthermore, when the terms "first", "second", "third", "fourth", "outer", "end", "axial", "height", "width", and similar terms are used herein, it should be understood that these terms have reference only to the structure shown in the drawings as it would appear to a person viewing the drawings and are utilized only to facilitate describing the invention.

### DETAILED DESCRIPTION OF THE INVENTION

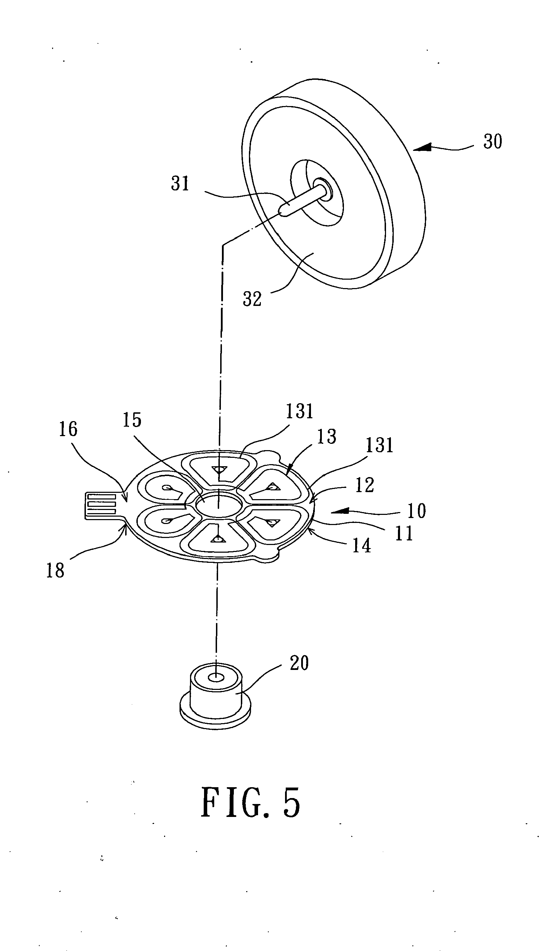

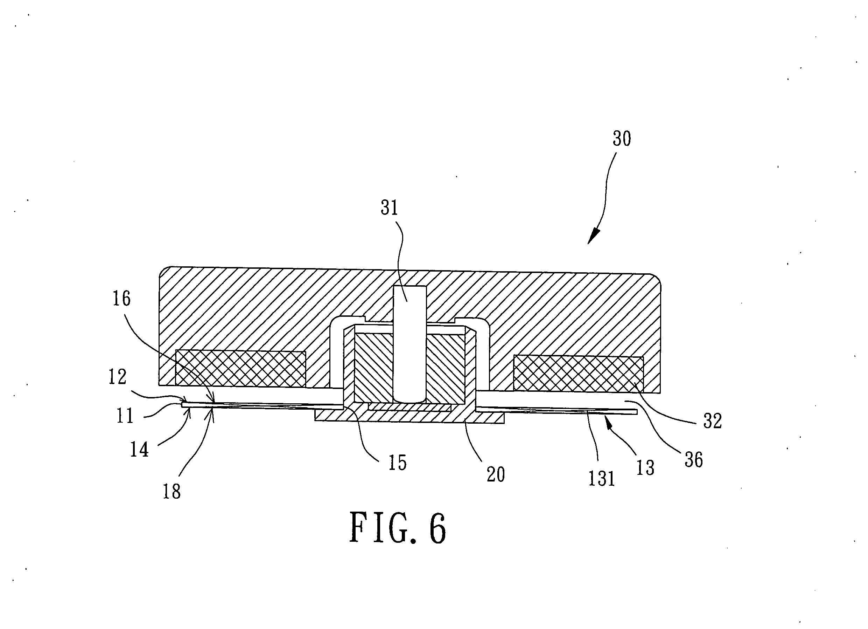

A miniature motor of a first embodiment according to the preferred teachings of the present invention is shown in FIGS. 5 and 6. The miniature motor includes a base 10, a shaft seat 20, and a rotor 30. The base 10 includes a layout layer 11 and an outer layer 12. The base 10 is preferably a printed circuit board and has opposite first and second faces 16 and 18 spaced along an axis. The layout layer 11 includes coil unit 13 that can be formed by integral formation. As an example, the coil unit 13 can be formed in the layout layer 11 by layout. The coil unit 13 includes a plurality of electrically connected coils 131. The outer layer 12 is electrically insulative and is provided on the first face 16 of the base 10 to form an electrically insulating layer for the layout layer 11. An electrically insulating bottom layer 14 is provided on the second face 18 of the base 10 to form an electrically insulating layer for the layout layer 11. The layout layer 11 is intermediate the outer layer 12 and the bottom layer 14 along the axis.

The coil unit 13 can be electrically connected to a drive circuit directly mounted on the base 10. Alternatively, the coil unit 13 can be electrically connected to an external drive circuit not in direct, physical contact with the base 10. The base 10 includes a through-hole 15 extending from the outer layer 12 through the layout layer 11 and the bottom layer 14 for coupling with the shaft seat 20. Alternatively, the base 10 does not have to include the through-hole 15, and the base 10 can be integrally formed with the base 10 as a single continuous monolithic piece. The coils 131 surround the shaft seat 20.

The rotor 30 includes a shaft 31 and a permanent magnet 32. The shaft 31 is received in the through-hole 15 and coupled to the shaft seat 20 so that the shaft 31 is rotatable relative to the base 10 about the axis. The permanent magnet 32 is aligned with the coil unit 13. An air gap 36 is formed between the permanent magnet 32 and the outer layer 12 of the base 10. The coil unit 13 is outside of the air gap 36.

In use, the base 10 and the shaft seat 20 can be coupled with a housing, and a plurality of blades can be formed on an outer periphery of the rotor 30 to form a heat-dissipating fan. The drive circuit can activate the coil unit 13 to interact with the permanent magnet 32 for driving the rotor 30 to rotate. Rotation of the rotor 30 drives air currents to proceed with heat dissipation. It can be appreciated that the miniature motor according to the preferred teachings of the present invention can be utilized in other fields using motors, not limited to the field of heat-dissipating fans.

Since the coil unit 13 is on a side of the outer layer 12 and since the coil unit 13 is integral with the layout layer 11, the coil unit 13 can be integrated into an interior of the base 10 without protruding out of the outer layer 12 of the base 10. Specifically, the coil unit 13 is outside of the air gap 36 between the permanent magnet 32 and the outer layer 12 of the base 10. Namely, no coils are located between the permanent magnet 32 and the outer layer 12 of the base 10. The height of the base 10 along the axis is not significantly increased, although the coil unit 13 is integrated into the base 10. The overall height of the miniature motor along the axis is reduced while having a simplified structure. Thus, the miniature motor formed by the base 10, the shaft seat 20, and the rotor 30 according to the preferred teachings of the present invention meets the design trend of compactness and miniaturization.

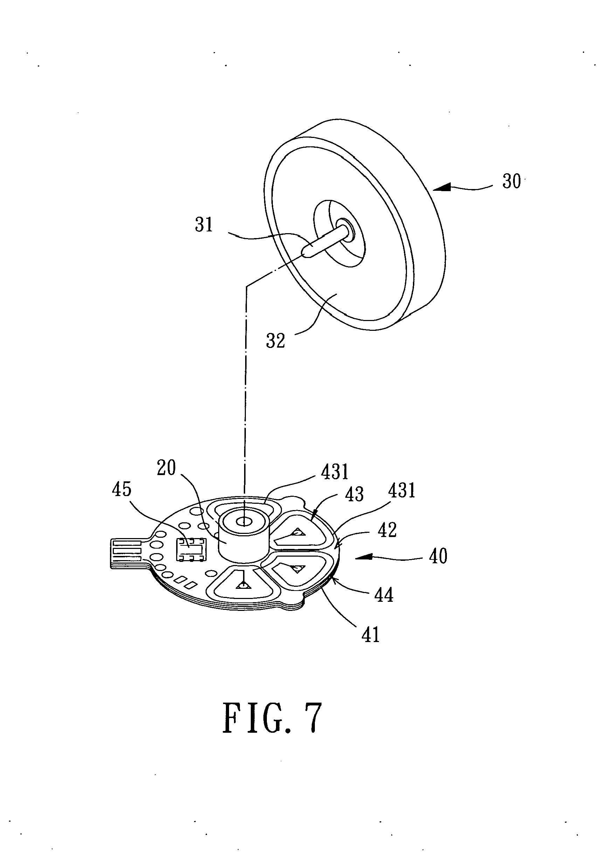

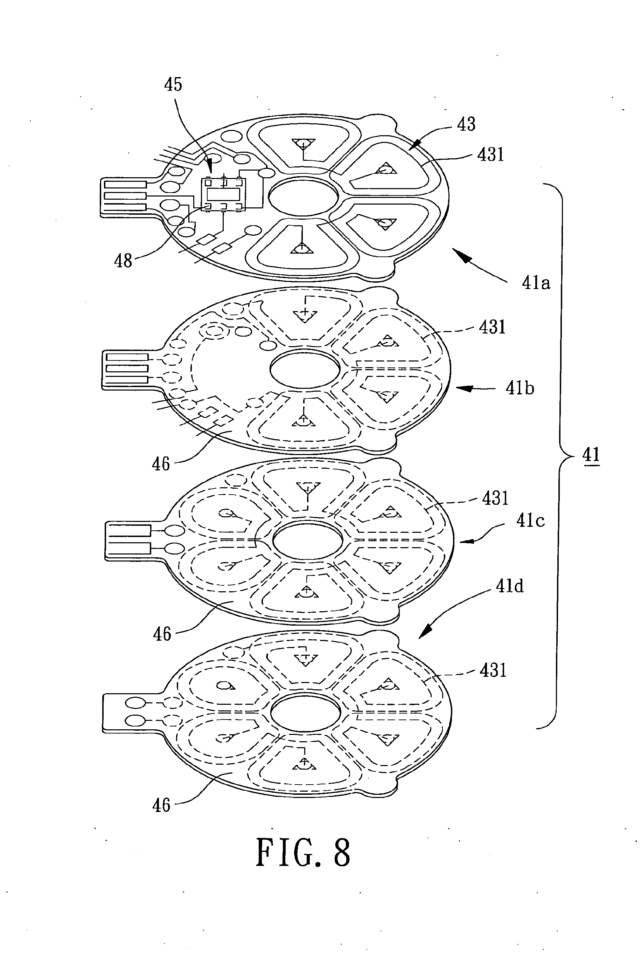

FIGS. 7 and 8 show a miniature motor of a second embodiment according to the preferred teachings of the present invention. The miniature motor includes a base 40, a shaft seat 20, and a rotor 30. The shaft seat 20 is integrally formed with the base 40 as a single continuous monolithic piece. The shaft seat 20 and the rotor 30 of the second embodiment are substantially the same as those of the first embodiment and, thus, not described in detail to avoid redundancy.

The base 40 includes a layout layer 41 having a plurality of circuit layers. In the preferred form shown in FIGS. 7 and 8, the layout layer 41 has first, second, third, and fourth circuit layers 41a, 41b, 41c, and 41d stacked along the axis. An outer layer 42 and a bottom layer 44 are provided on opposite faces of the layout layer 41 formed by the first, second, third, and fourth circuit layers 41a, 41b, 41c, and 41d. Preferably, the outer layer 42 and the bottom layer 44 are electrically insulative to provide electrically insulating layers for the layout layer 41 intermediate the outer layer 42 and the bottom layer 44. Each circuit layer 41a, 41b, 41c, 41d has two faces spaced along the axis. An electrically insulating layer 46 can be formed between two mutually facing faces of two adjacent circuit layers 41a and 41b, 41b and 41c, 41c and 41d. In the preferred form shown in FIGS. 7 and 8, an electrically insulating layer 46 is formed on a face of each of the second, third, and fourth circuit layers 41b, 41c, and 41d. The base 40 includes a coil unit 43 formed in the layout layer 41 by layout. The coil unit 43 includes a plurality of electrically connected coils 431 formed on at least one of the faces of each of the first, second, third, and fourth circuit layers 41a, 41b, 41c, and 41d. Note that an outer face of the circuit layer 41a forms an outer face of the whole layout layer 41, and an outer face of the circuit layer 41d forms another outer face of the whole layout layer 41.

The coils 431 can be formed by layout on the first, second, third, and fourth circuit layers 41a, 41b, 41c, 41d that form the layout layer 41 of the base 40 to increase the total turns of the coils 431. Thus, the speed and the torque of the miniature motor according to the preferred teachings of the present invention can be increased without significantly increasing the overall axial height of the base 40 and without changing the width of the base 40, meeting the design trend of compactness and miniaturization.

A drive circuit 45 can be directly formed in any one of the circuit layers 41a, 41b, 41c, and 41d. In the preferred form shown in FIGS. 7 and 8, the drive circuit 45 is formed on the outer face of the first circuit layer 41a. A circuit area 48 can be formed between two adjacent coils 431 of the first circuit layer 41a to provide a space for receiving the drive circuit 45. By incorporating the drive circuit 45 into the base 40, the complexity of structure and assembly can be reduced.

As mentioned above, since the coil unit 13, 43 of the base 10, 40 is on a side of the outer layer 12, 42 and since the coil unit 13, 43 is integral with the layout layer 11, 41, the axial height and the overall volume of the miniature motor according to the preferred teachings of the present invention are reduced, meeting the design trend of compactness and miniaturization.

Thus since the invention disclosed herein may be embodied in other specific forms without departing from the spirit or general characteristics thereof, some of which forms have been indicated, the embodiments described herein are to be considered in all respects illustrative and not restrictive. The scope of the invention is to be indicated by the appended claims, rather than by the foregoing description, and all changes which come within the meaning and range of equivalency of the claims are intended to be embraced therein.

## Claims

1. A miniature motor comprising, in combination:
a base (10, 40) including a layout layer (11, 41) having first and second faces (16,18) spaced along an axis, with the layout layer (11, 41) including a coil unit (13, 43), with the base (10, 40) further including an outer layer (12, 42) provided on the first face (16) of the layout layer (11,41);
a shaft seat (20) provided on the base (10, 40); and
a rotor (30) including a shaft (31) and a permanent magnet (32), with the shaft (31) coupled to the shaft seat (20) and rotatable about the axis, with the permanent magnet (32) aligned with the coil unit (13, 43), with an air gap (36) formed between the permanent magnet (32) and the outer layer (12, 42) of the base (10, 40), with the coil unit (13, 43) outside of the air gap (36).

2. The miniature motor as claimed in claim 1, with the base (40) further including a drive circuit (45), and with the coil unit (43) electrically connected to the drive circuit (45).

3. The miniature motor as claimed in claim 2 with the layout layer (41) including a plurality of circuit layers (41a, 41b, 41c, 41d) stacked along the axis, with each of the plurality of circuit layers (41a, 41b, 41c, 41d) having third and fourth faces spaced along the axis, with the coil unit (43) including a plurality of electrically connected coils (431) formed on at least one of the third and fourth faces of each of the plurality of circuit layers (41a, 41b, 41c, 41d), with the third surface of one of two outermost ones of the plurality of circuit layers (41a, 41b, 41c, 41d) forming the first face of the layout layer (41), and with the fourth surface of another of the two outermost ones of the plurality of circuit layers (41a, 41b, 41c, 41d) forming the second face of the layout layer (41).

4. The miniature motor as claimed in claim 3, with a circuit area (48) formed between two adjacent coils (431) of one of the plurality of circuit layers (41a, 41b, 41c, 41d), and with the drive circuit (45) mounted in the circuit area (48).

5. The miniature motor as claimed in claim 3, with the third face of one of two of plurality of circuit layers (41a, 41b, 41c, 41d) adjacent to each other and the fourth face of another of the two of plurality of circuit layers (41a, 41b, 41c, 41d) facing each other, with the miniature motor further comprising, in combination: an electrically insulating layer (46) formed on one of the mutually facing third and fourth faces.

6. The miniature motor as claimed in claim 1, with the outer layer (12, 42) being an electrically insulating layer (46).

7. The miniature motor as claimed in claim 1, with the base (10, 40) further including a bottom layer (14, 44) provided on the second face of the layout layer (11, 41), and with the layout layer (11, 41) intermediate the outer layer (12, 42) and the bottom layer (14, 44) along the axis.

8. The miniature motor as claimed in claim 7, with the bottom layer (14, 44) being an electrically insulating layer.

9. The miniature motor as claimed in claim 1, with the base (10, 40) including a through-hole (15) extending along the axis, and with the shaft
seat (20) received in the through-hole (15).

10. The miniature motor as claimed in claim 1, with the shaft seat (20)
integrally formed with the base (10, 40) as a single continuous monolithic piece.
